Europäisches Patentamt

European Patent Office

Office européen des brevets

(11) Veröffentlichungsnummer: **0 212 045**
**A2**

# (12) EUROPÄISCHE PATENTANMELDUNG

(21) Anmeldenummer: 86101552.7

(22) Anmeldetag: 06.02.86

(51) Int. Cl.⁴: **G 01 D 3/00**

(30) Priorität: 11.07.85 DE 3524770

(43) Veröffentlichungstag der Anmeldung: 04.03.87
Patentblatt 87/10

(84) Benannte Vertragsstaaten: AT CH DE FR GB IT LI NL SE

(71) Anmelder: **Wilhelm, Raimund, Thüringer Strasse 45,
D-7080 Aalen (DE)**

(72) Erfinder: **Wilhelm, Raimund, Thüringer Strasse 45,
D-7080 Aalen (DE)**

(74) Vertreter: **Schroeter, Helmut et al, Bocksgasse 49,
D-7070 Schwäbisch Gmünd (DE)**

(54) **Anpassung eines Anzeige- oder Auswertgerätes an einen Sensor.**

(57) Vorrichtung zur automatischen Anpassung des Meßbereichs eines Anzeige- oder Auswertgerätes (Gerät) (G) an den Bereich von Augangsspannungen eines Sensors (S) für eine physikalische Größe. Zum Anschluß des Sensors an das Gerät dient ein Steckverbinder (5), über den eine Meßsignalleitung (M) zum Gerät führt. Zur Anpassung kann mindestens ein sensorseitig angeordneter Erkennungswiderstand dienen, der durch eine über den Steckverbinder führende Erkennungsleitung (E) zu einer geräteseitigen Erkennungsschaltung führt. Jedes der in Frage kommenden Geräte ist mit dem einen Teil eines Steckverbinders versehen, während jeder der Sensoren mit dem anderen Teil eines gleichen Steckverbinders versehen ist, so daß verschiedene Sensoren mit demselben Gerät verbunden werden können. Zur Anpassung dienen einige im Gerät vorgesehene Anpaßwiderstände (R1 bis Rn), von denen mindestens einer von der Erkennungsschaltung her, insbesondere vom Ausgang eines Stufenkomparators eingeschaltet werden kann. Zur Anpassung können anstelle eines Erkennungswiderstandes sensorseitig Kodierungsschalter (Sk1 bis Skn) vorgesehen sein und geräteseitig ein entsprechender Dekoder (16), der für die Einschaltung der Anpaßwiderstände sorgt.

wil/11/ep-b.d

BESCHREIBUNG

0212045
wil-11-ep
28.1.1986
Sr/Sa

## ANPASSUNG EINES ANZEIGE- ODER AUSWERTGERÄTES AN EINEN SENSOR

### Stand der Technik, Aufgabe, Lösung

Die Erfindung bezieht sich auf eine Vorrichtung zur automatischen Anpassung des Meßbereichs eines Anzeige- oder Auswertgerätes (im Folgenden einfach "Gerät" genannt) an den Bereich von Ausgangsspannungen eines Sensors für eine physikalische Größe. Die zu messende physikalische Größe kann beliebig sein, z. B. ein Druck, eine Temperatur, ein pH-Wert oder irgendeine elektrische Größe. Während ein Anzeigegerät lediglich die zu messende Größe, z. B. durch einen Zeigerausschlag oder durch eine Digitalanzeige anzeigt, soll ein Auswertgerät (mit oder ohne Anzeige) als Antwort auf ein ihm eingegebenes Meßsignal irgendetwas bewerkstelligen, z. B. ein Alarmsignal auslösen oder eine Schaltung aktivieren, die ihrerseits beliebige Aufgaben zu erfüllen haben kann. Einem bestimmten Bereich von Spannungen, in den ein vom Sensor abgegebenes Signal (das Meßsignal) fällt, muß z. B. ein Anzeigegegerät so angepaßt werden, daß es einerseits nicht überlastet wird, andererseits seine Anzeige aber gut ablesbar ist. Entsprechendes gilt für ein Auswertgerät.

Wird nur ein bestimmter Sensor mit einem bestimmten Gerät verwendet, so ist die Anpassung kein Problem. Anders liegt der Fall, wenn verschiedenartige Sensoren benutzt werden sollen, die Meßsignale sehr unterschiedlicher Größen abgeben und wenn alle wechselweise mit demselben Gerät verbunden werden sollen oder wenn derselbe Sensor wechselweise mit dem einen oder anderen Gerät verbunden werden soll und dergleichen Varianten mehr.

Durch die vorliegende Erfindung soll die erforderliche Anpassung automatisch beim Anschließen eines Sensors an ein Gerät durchgeführt werden.

0212045

Diese Aufgabe wird durch die Erfindung nach Anspruch 1 gelöst.

Das Folgende bezieht sich auch auf die Wortlaute der Ansprüche.

Erfindungsgemäß wird zum Anschluß des Sensors an das Gerät ein Steckverbinder verwendet. Jedes der in Frage kommenden Geräte ist mit dem einen Teil (z. B. mit Steckstiften) des Steckverbinders versehen, während jeder der Sensoren mit dem anderen Teil (z. B. mit Steckbuchsen) des Steckverbinders versehen ist. Somit kann jeder der Sensoren an jedes der Geräte angeschlossen werden.

Zur automatischen Anpassung dienen der sensorseitig angeordnete Erkennungswiderstand und die geräteseitig angeordnete Erkennungsschaltung, die erst nach dem Anschließen eines Gerätes an einen Sensor wirksam wird.

### Weiterbildungen der Erfindung

Nach Anspruch 2 läßt sich eine Anpassung unter Verwendung einer Reihenschaltung aus zwei Abschnitten bewerkstelligen.

Der eine Abschnitt entspricht dem Innenwiderstand des Gerätes oder ist gleich diesem Innenwiderstand, der andere, der dem Sensor zugeordnet ist, entspricht einem Erkennungswiderstand oder ist gleich dem Erkennungswiderstand. Dieser Erkennungswiderstand hat für jeden Sensor eine bestimmte typische Größe. Im einfachsten Falle, wenn nämlich alle in Frage kommenden Geräte gleichen Innenwiderstand haben, wird durch die Größe des Erkennungswiderstandes selbst für die richtige Anpassung gesorgt. Hier kann mit einer einfachen Anordnung nach Anspruch 3 gearbeitet werden, bei der die Meßsignalleitung zugleich Erkennungsleitung ist.

In komplizierteren Fällen kann die Größe des Erkennungswiderstandes nach dem Anschließen des Sensors vom Gerät her ermittelt werden. Vorzugsweise wird dann eine von der Meßsignalleitung unabhängige Erkennungsleitung verwendet. Passend zum Innenwiderstand des Gerätes kann nach Anspruch 5 einer von mehreren Anpaßwiderständen eingeschaltet werden, die z. B. als Shunts parallel zum Eingang des Gerätes geschaltet sind.

Zur Einschaltung des geeigneten Anpaßwiderstandes kann nach Anspruch 6 ein Stufenkomparator verwendet werden, der an die Erkennungsleitung angeschlossen ist.

Nach den Ansprüchen 9 und 10 läßt sich die Erkennung des verwendeten Sensors für den Fall durchführen, daß Sensor und Gerät mit Wechselstrom betrieben werden.

Es kann erwünscht sein, die Größe des Erkennungswiderstandes eines Sensors zu verschlüsseln, so daß seine Größe von außen mit normalen Mitteln nicht gemessen werden kann. Solche Maßnahmen haben für Hersteller Bedeutung, die wünschen, daß nur von ihnen selbst hergestellte Sensoren und Geräte verwendet werden, dagegen nicht z. B. Sensoren von fremden Firmen zu eigenen Geräten. Eine Verschlüsselung läßt sich nach Anspruch 11 erreichen, wobei eine aktivierbare Halbleiterschaltung dafür sorgt, daß das Größenverhältnis der hier verwendeten beiden Erkennungswiderstände nur für einen sehr kurzen Zeitraum nach dem Zusammenstecken von Gerät und Sensor festgestellt und dadurch das Gerät angepaßt werden kann. Geräteseitig werden hierbei am Ausgang eines Stufenkomparators dynamische Speicher verwendet, die ebenfalls nur kurzzeitig ein Signal zum Einstellen des geeigneten Anpassungswiderstandes abgeben.

Nach Anspruch 14 läßt sich eine Verschlüsselung auf andere Weise erreichen. Hier wird von einem sensorseitigen Komparator normalerweise kein Ausgangssignal über einen Erkennungswiderstand abgegeben, sondern erst, wenn Potentiale an seinen Eingängen geändert werden. Dies kann von

einem geräteseitig angeordneten Spannungskonstanthalter her geschehen, der als Spannungsquelle für den Sensor dient und dessen Ausgangsspannung kurz nach dem Einschalten einen anderen, insbesonderen höheren Wert annimmt. Durch diesen höheren Wert werden die Potentiale an den Eingängen des Komparators im Sensor so geändert, daß der Komparator kurzzeitig ein Ausgangssignal über den Erkennungswiderstand in die Erkennungsleitung gibt.

Nach Anspruch 16 läßt sich eine verschlüsselte Anpassung ohne Erkennungswiderstand in der Weise durchführen, daß sensorseitig einige, insbesondere binäre, Kodierungsschalter vorgesehen sind und geräteseitig ein Dekoder, insbesondere ein Binär-Dezimal-Dekoder, der dann für die Einstellung des geeigneten Anpassungswiderstandes sorgt.

Ausführungsbeispiele mit weiteren Merkmalen der Erfindung werden im folgenden anhand der Zeichnungen beschrieben.

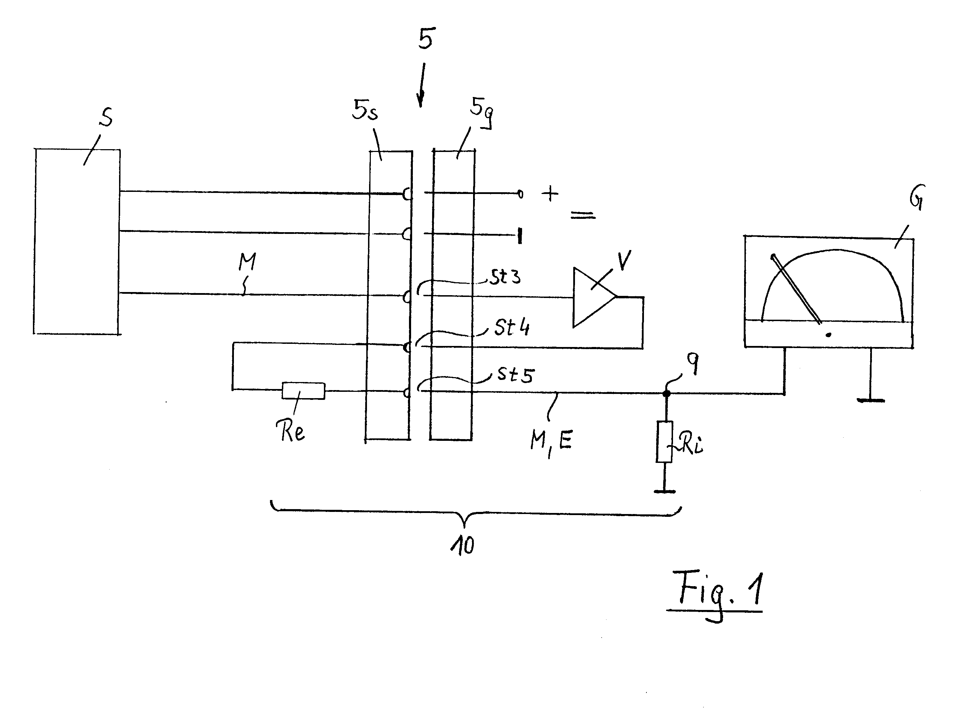

Die Figuren 1 bis 7 zeigen Schaltungen (oder deren jeweils wesentliche Teile) verschiedener Vorrichtungen zur automatischen Meßbereichs-Anpassung.

## Allgemeines zu allen Ausführungsbeispielen

Der Sensor ist mit S, das Gerät mit G und der Steckverbinder mit 5 bezeichnet. Der Sensor kann entweder für sich, z. B. durch ein eigenes Netzteil mit Spannung versorgt werden, oder wie in allen Ausführungsbeispielen, über den Steckverbinder 5 vom Gerät her. Jede einzelne Buchse und jeder einzelne Stecker des Steckverbinders werden als "Steckelement St..." bezeichnet. Mit Ri ist immer der Innenwiderstand des Gerätes bezeichnet, mit Re der Erkennungswiderstand des Sensors.

Eine das Meßsignal führende Leitung ist stets mit M bezeichnet, gleichgültig, ob sie zum Sensor oder zum Gerät gehört und ob sie ein unverstärktes oder schon verstärktes Meßsignal führt. Anstelle der überall dargestellten einzigen können zwei parallele Erkennungsleitungen vorhanden sein. Alle Abschnitte einer vom Erkennungswiderstand Re herkommenden Leitung sind immer mit E bezeichnet, gleichgültig ob sie sensorseitig, geräteseitig, vor oder nach einem Verstärker vorhanden sind.

## Erstes Ausführungsbeispiel (Figur 1)

Der Sensor wird mit Gleichspannung versorgt. Die Meßsignalleitung M vom Sensor führt über ein Steckelement St3 zum Eingang eines im Gerät G angeordneten Verstärkers V, dessen Ausgang zu einem Steckelement St4 führt. Sensorseitig sind die Steckelemente St4 und St5 durch den Erken-

nungswiderstand Re überbrückt. Geräteseitig führt vom Steckelement St5
eine Leitung M, E, die sowohl Meßsignalleitung als auch Erkennungsleitung ist, zum Gerät G, dessen Innenwiderstand Ri gesondert eingezeichnet
ist. Vorausgesetzt, daß nur Geräte verwendet werden, die gleiche Innenwiderstände und gleiche Anzeigebereiche haben, genügt diese Schaltung,
um Sensoren verschiedener Art diesen Geräten anzupassen. Der Erkennungswiderstand Re kann im Sensor selbst oder im Sensorsteckteil angeordnet
sein. Maßgebend für die Anpassung ist das Verhältnis der Widerstände
Re/Ri. Diese beiden Widerstände bilden gemeinsam einen Spannungsteiler
10. Ein Abgriff 9 zwischen beiden Widerständen ist der Signaleingang
des Gerätes G. (Ri ist der Innenwiderstand des Gerätes.)


## Zweites Ausführungsbeispiel


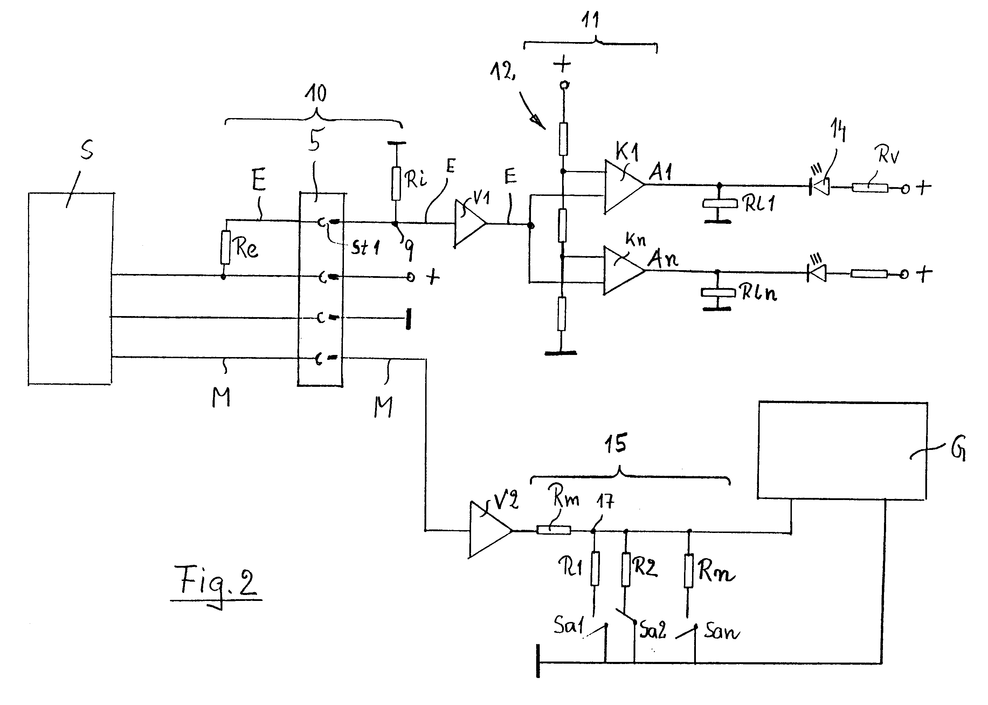

In Figur 2 und den folgenden Figuren ist der Steckverbinder vereinfacht
dargestellt. Nach Figur 2 sind Meßsignalleitung M und Erkennungsleitung
E voneinander getrennt. Zur Versorgung dient wiederum Gleichspannung.
Wiederum bilden der sensorseitig angeordnete Erkennungswiderstand Re
und der Innenwiderstand Ri des Gerätes einen Spannungsteiler 10. Der Erkennungswiderstand Re führt vom Pluspol der Spannungsversorgung über
Steckelemente St1 zum Abgriff 9 des Spannungsteilers. Dieser Abgriff
ist mit dem Eingang eines Verstärkers V1 verbunden. Der Verstärkerausgang führt zu einem Stufenkomparator, der als ganzes mit 11 bezeichnet
ist und einen digitalen, insbesondere dezimalen Ausgang hat. Das rechte
Ende der Erkennungsleitung E ist mit dem einen Eingang einer Reihe von
Komparatoren K1 bis Kn verbunden, von denen hier nur zwei dargestellt
sind. Die anderen Eingänge dieser Komparatoren liegen an den Verbindungsstellen zwischen den einzelnen Widerständen (es sind mehr Widerstände als dargestellt) eines Spannungsteiles 12, der die Spannungsquelle überbrückt.

Je nach der Größe des den Verstärker V1 verlassenden Erkennungssignals
können an einem oder mehreren der Komparatoren Ausgangssignale auftreten. Bei einfachen Komparatoren entweder an keinem, an einem Teil der Komparatoren oder an allen. Werden Fensterkomparatoren verwendet, so tritt nur an einem ausgewählten Komparator ein Ausgangssignal auf, nämlich nur an demjenigen, bei dem die Eingangs-Spannungsdifferenz in einen bestimmten Bereich, das "Fenster" fällt. Die Ausgänge der Komparatoren liegen über je einen Reihenwiderstand Rv am Pluspol. In diesen Leitungen kann je eine Leuchtdiode 14 liegen. Die Leuchtdioden können zur Anzeige der zu messenden physikalischen Größe und zur Anzeige des eingestellten Meßbereiches verwendet werden und können je ein Fenster mit einer Aufschrift wie "Druck", "Temperatur" usw. erleuchten.

Zwischen den Ausgängen A1 bis An und Masse liegt je ein Relais Rl1 bis Rln. Bei Verwendung von Fensterkomparatoren wird nur eines dieser Relais eingeschaltet, und dieser Fall wird für die weitere Beschreibung zugrunde gelegt.

Die Meßsignalleitung enthält geräteseitig einen Verstärker V2 und anschließend einen Spannungsteiler 15 mit einem Abgriff 17, der mit dem positiven Eingang des Gerätes G verbunden ist. Zwischen diesem Abgriff und dem Ausgang des Verstärkers V2 liegt ein Reihenwiderstand Rm (der Meßsignalleitung), der den einen Zweig des Spannungsteilers 15 bildet. Den anderen Zweig des Spannungsteilers 15, der den Eingang des Gerätes G überbrückt, bildet eine Gruppe zueinander paralleler Reihenglieder, die je einen Widerstand (Anpaßwiderstand) R1 bis Rn und einen Analogschalter Sa1 bis San enthalten. Diese Schalter sind durch die Relais Rl1 bis Rln wahlweise zu betätigen. Je nachdem, welcher Komparator anspricht, wird einer der Anpaßwiderstände R1 bis Rn eingeschaltet. Er überbrückt als Shunt den Eingang des Gerätes und stellt damit den erforderlichen Meßbereich ein. Für die Anpassung sind die Verhältnisse R1/Rm bis Rn/Rm der Widerstände maßgebend.

Was hier der Einfachheit halber als Relaisschaltung dargestellt wurde, läßt sich eleganter unter Verwendung von Halbleiterschaltern durchführen, wodurch Schaltkontakte vermieden werden.

0212045

## Drittes Ausführungsbeispiel

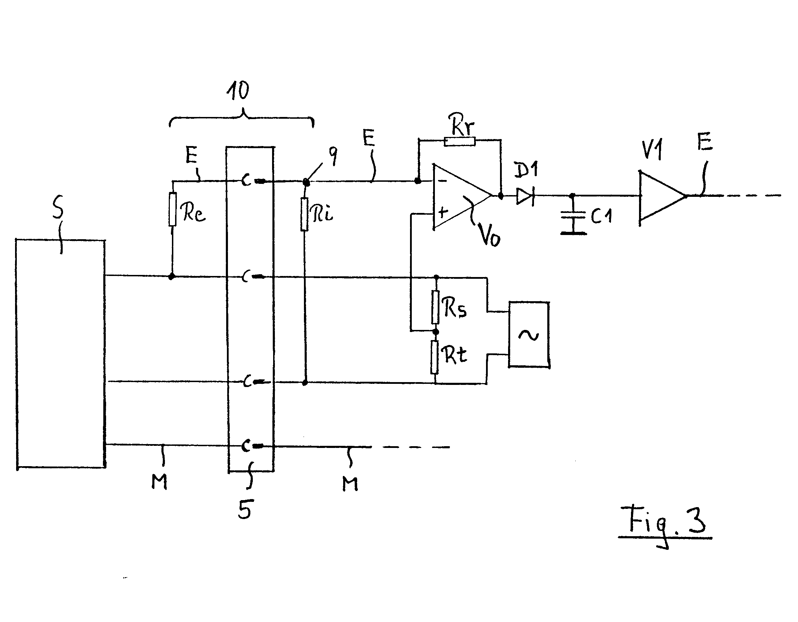

Bei dem Ausführungsbeispiel nach Figur 3 wird der Sensor mit Wechselspannung versorgt. Es wird wiederum ein Spannungsteiler 10 gebildet,
der sensorseitig den Erkennungswiderstand Re und geräteseitig den
Innenwiderstand Ri des Gerätes enthält. Sein Abgriff 9 wird dem negativen Eingang eines Operationsverstärkers Vo zugeführt. Um für den anderen Eingang dieses Operationsverstärkers eine definierte Spannung zu
haben, wird die Spannungsquelle durch zwei gleich große Widerstände Rs
und Rt überbrückt, deren gemeinsame Verbindungsstelle mit dem positiven
Eingang des Operationsverstärkers Vo verbunden ist. Vom Ausgang des
Operationsverstärkers führt in üblicher Weise ein Rückkopplungswiderstand Rr zu seinem Signaleingang, d. h. zum Abgriff 9. Das Ausgangssignal des Operationsverstärkers wird durch eine Diode D1 mit Kondensator
C1 gleichgerichtet. Das gleichgerichtete Signal wird einem Verstärker V1
zugeführt und dessen Ausgangsignal wiederum einem Stufenkomparator. Die
übrige Schaltung und ihre Wirkungsweise sind die gleichen wie in Figur 2
dargestellt und anhand der Figur 2 beschrieben.

Die in Figur 3 dargestellten Widerstände brauchen keine ohmschen Widerstände zu sein, sondern können ganz allgemein Impedanzen sein und Kondensatoren, Spulen und/oder Halbleiter enthalten.

## Viertes Ausführungsbeispiel

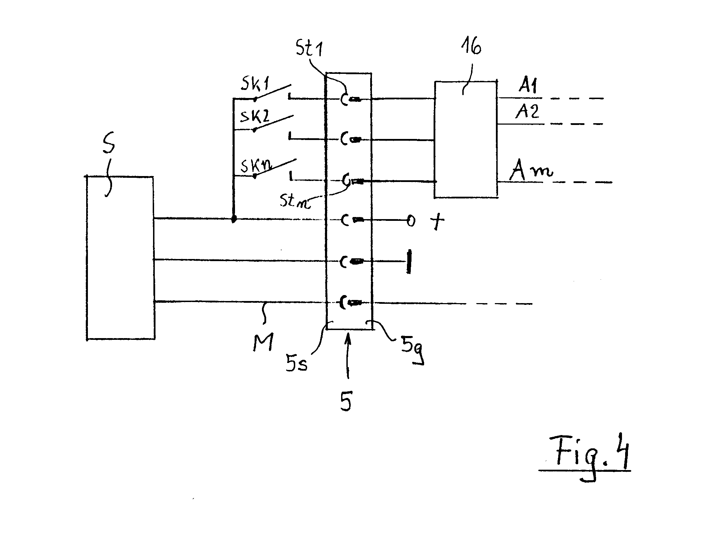

Bei dem Ausführungsbeispiel nach Figur 4 wie auch bei den folgenden wird
der Sensor S mit Gleichspannung versorgt. Nach Figur 4 läßt sich die Anpassung über eine Kodierung und Dekodierung erzielen. Sensorseitig ist
eine Reihe von z. B. acht Kodierungsschaltern Sk1, Sk2 bis Skn vorgesehen, die alle mit dem Pluspol verbunden sind. Die andere Seite jedes
der Schalter führt zu je einem der Steckelemente St1 bis Stn. Geräteseitig ist ein Binär-Dezimal-Dekoder 16 vorgesehen, der entsprechend n Eingänge hat. Je nachdem, welche der Schalter Sk1 bis Skn geschlossen sind, steht an einem der dezimalen Ausgänge A1 bis Am ein Signal an. Wie anhand der Figur 2 beschrieben, wird dementsprechend einer der Anpaßwiderstände R1 bis Rn des Gerätes eingeschaltet. Das Meßsignal wird dem Gerät zugeführt, wie anhand der Figur 2 beschrieben.


## Fünftes Ausführungsbeispiel


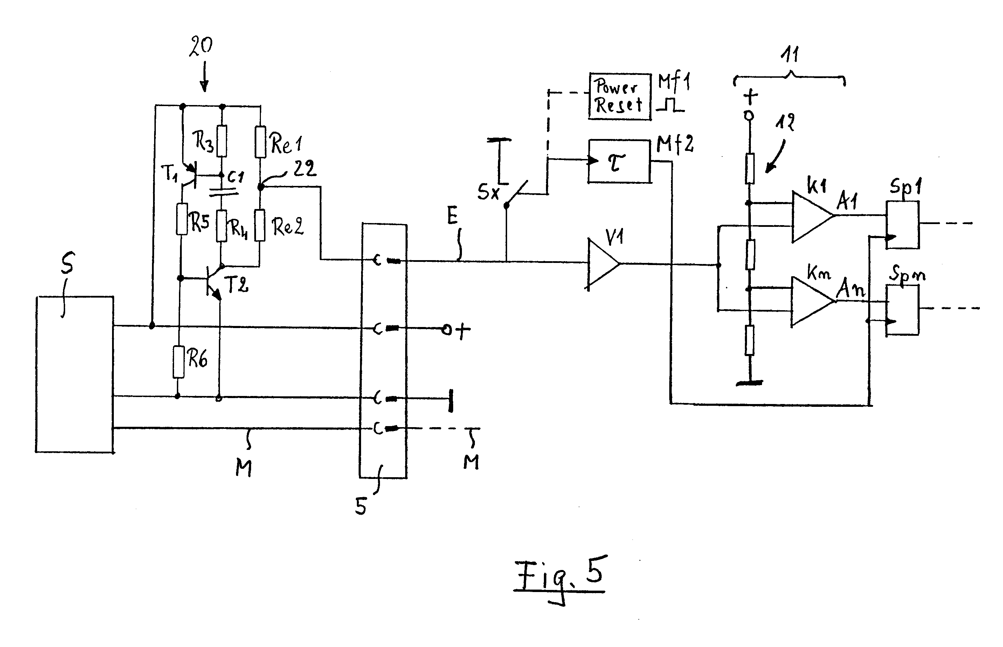

Nach Figur 5 läßt sich das Verhältnis zweier Erkennungswiderstände Re1 und Re2 verschlüsseln. Das Widerstandsverhältnis kann dann nur kurzzeitig, insbesondere beim Einstecken des Sensors oder beim Einschalten der Spannungsversorgung ermittelt werden. Hierzu ist u. a. eine aktivierbare Halbleiterschaltung vorgesehen, die als Ganzes mit 20 bezeichnet ist. Die Erkennungsleitung E läßt sich zwischen dem Steckverbinder 5 und dem Verstärker V1 durch einen Umschalter Sx an Masse legen. Der Umschalter läßt sich durch einen monostabilen Multivibrator (Monoflop Mf1 "Power Reset") für kurze Zeit schließen. Das Monoflop Mf1 kann entweder auf Anforderung von Hand oder automatisch oder nach Anlegen der Versorgungsspannung gestartet werden. Es kehrt nach Ablauf eines Impulses (der ersten Schaltzeit) von z. B. 10 msec Dauer wieder in seinen Urzustand zurück, in dem er die Erkennungsleitung E wieder von Masse getrennt hält. Während der ersten Schaltzeit liegt ein Abgriff 22 zwischen den beiden Erkennungswiderständen Re1 und Re2 an Masse. Die in Figur 5 obere Seite der Halbleiterschaltung 20 liegt an plus. Es wird nun über den Widerstand Re2, einen Widerstand R4 und einen Kondensator C1 ein Transistor T1 leitend. Hierdurch wird über einen Widerstand R5, der mit dem Kollektor dieses Transistors und der Basis eines Transistors T2 verbunden ist, der Transistor T2 leitend. Von nun an wird der Kondensator C1 aufgeladen.

Während dieses Ladevorganges (und danach, solange der Kondensator eine nennenswerte Ladung enthält) liegt die Reihenschaltung der Erkennungswiderstände Re1 und Re2 annähernd an der vollen Versorgungsspannung. Infolgedessen tritt in der Erkennungsleitung E ein Signal auf, dessen Spannung durch das Verhältnis der beiden Erkennungswiderstände gegeben ist. Es wird nach Durchlaufen des Verstärkers V1 in der weiter unten beschriebenen Weise ausgewertet, dient also zum Einstellen eines der Anpaßwiderstände R1 bis Rn (Figur 2) für das Gerät.

Nach Ablauf der ersten Schaltzeit wird vom Monoflop Mf1 her der Umschalter Sx wieder in seine eingezeichnete Stellung gebracht, wodurch einerseits der Abgriff 22 von Masse getrennt und andererseits ein Monoflop Mf2 gestartet wird, das einen dynamischen oder Clock-Eingang hat. Sein Ausgang ist mit je einem dynamischen Eingang von Speichern Sp1 bis Spn verbunden. Je ein weiterer für ein Nutzsignal vorgesehener Eingang der Speicher ist mit dem Ausgang eines der Komparatoren K1 bis Kn verbunden.

Das Monoflop Mf2 bleibt während einer zweiten Schaltzeit von z. B. einer halben Sekunde aktiv und aktiviert während dieser Zeit die Speicher Sp1 bis Spn. Dadurch übernehmen diese Speicher das Ausgangssignal oder die Ausgangssignale, die an den Ausgängen A1 bis An der Komparatoren K1 bis Kn auftreten.

Die an den Ausgängen der Speicher auftretenden Signale werden in der anhand der Figur 2 beschriebenen Weise zum Einschalten eines der Anpaßwiderstände R1 bis Rn verwendet.

Ein Erkennen des Verhältnisses der Erkennungswiderstände Re1/Re2 ist also nur möglich, solange der Kondensator C1 eine Ladung enthält. Es ist daher nicht möglich, ohne ein Gerät mit passender Abfrageschaltung von außen her das Widerstandsverhältnis zu messen.

## Sechstes Ausführungsbeispiel

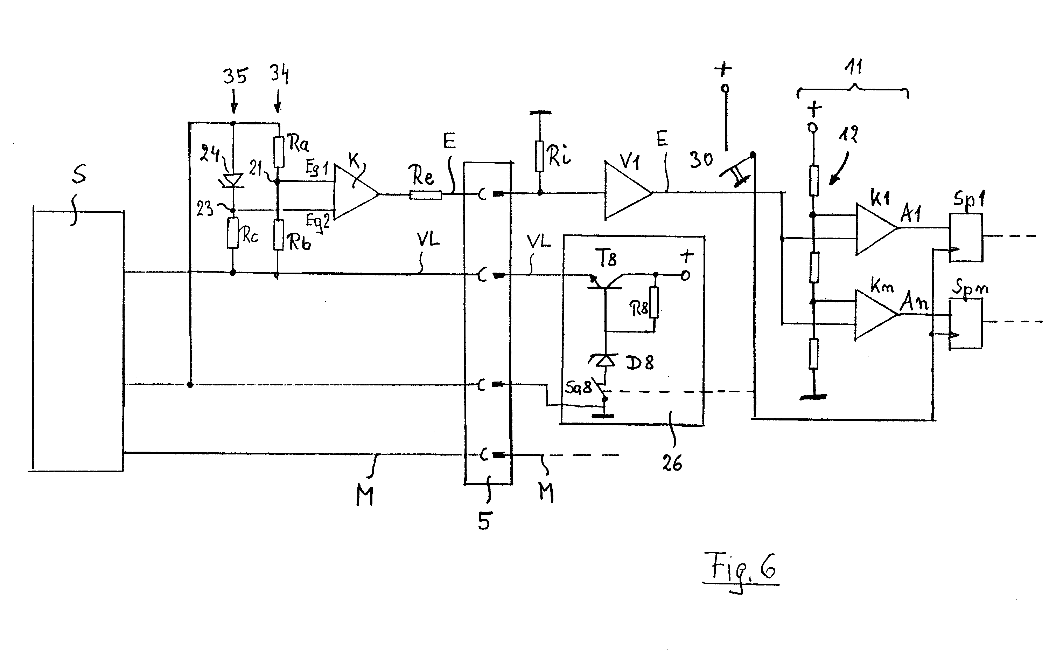

Auch bei der Schaltung nach Figur 6 läßt sich der Wert des Erkennungswiderstandes Re normalerweise von außen her nicht feststellen. Normalerweise liegt der Eingang Eg1 eines Komparators K auf einem niedrigeren Potential als dessen Eingang Eg2. Deshalb tritt am Ausgang des Komparators K und ebenso in der Erkennungsleitung E kein Signal auf.

Der eine Eingang Eg1 des Komparators K liegt an einem Abgriff 21 einer Reihenschaltung 34 aus zwei gleich großen Widerständen Ra und Rb, deren andere Enden an den beiden Polen der Spannungsquelle (Versorgungsleitung VL und Masse) liegen. Der zweite Eingang (Eg2) des Komparators liegt an einem Abgriff 23 einer Reihenschaltung 35 aus einer Referenzdiode 24 und einem Widerstand Rc. Die äußeren Enden dieser Reihenschaltung 35 liegen ebenfalls an der Versorgungsspannung. Die Bezugsspannung der Referenzdiode ist so bemessen, daß am Eingang Eg2 normalerweise ein höheres Potential als am Eingang Eg1 liegt, so daß der Komparator normalerweise kein Ausgangssignal abgibt.

Die Schaltung wird dadurch aktiviert, daß die Versorgungsspannung kurzzeitig erhöht wird. Hierzu dient ein Spannungskonstanthalter 26 mit einem Transistor T8, einem Widerstand R8 und einer Zenerdiode D8. Zwischen der Zenerdiode und Masse liegt ein Schalter (Öffner) Sa8. Der Schalter kann von Hand oder beim Einschalten des Gerätes kurzzeitig geöffnet werden und sorgt dann für eine definitive Spannungsänderung am Ausgang des Spannungs-Konstanthalters 26 in der Leitung VL. Bei offenem Schalter Sa8 kann nämlich die Zenerdiode nicht mehr arbeiten. Durch diese Spannungsänderung wird das Potential am Eingang Eg1 des Komparators K kurzzeitig erhöht. Es wird höher als das am Eingang Eg2, und damit tritt am Ausgang des Komparators und nach dem Erkennungswiderstand Re in der Erkennungsleitung E ein Erkennungssignal auf, das es ermöglicht, das Verhältnis des Erkennungswiderstandes Re zum Innenwiderstand Ri festzustellen.

0212045

Durch einen Taster 30 wird beim Einschalten von Gerät und Sensor zweierlei gleichzeitig erreicht. Einerseits wird vom Schalter S8 im Spannungskonstanthalter 26 kurzzeitig eine Überspannung erzeugt. Andererseits wird beim Schließen des Tasters 30 je ein Impuls auf den Clock-Eingang jedes der Speicher gegeben, so daß die Speicher kurzzeitig aktiviert werden.

Wie der Schalter S8 im einzelnen betätigt wird, ist dem Fachmann bekannt und hier nur durch eine gestrichelte Verbindung 32 dargestellt.

Nach Verstärkung im Verstärker V1 wird das Erkennungssignal wiederum einem Stufenkomparator 11 zugeführt, wie es oben anhand der Figur 2 beschrieben wurde. Eines oder mehrere Ausgangssignale des Stufenkomparators werden in den Speichern Sp1 bis Spn gespeichert und dienen, wie beschrieben, zum Einschalten eines der Anpaßwiderstände R1 bis Rn für das Gerät.

## Variante des sechsten Ausführungsbeispiels

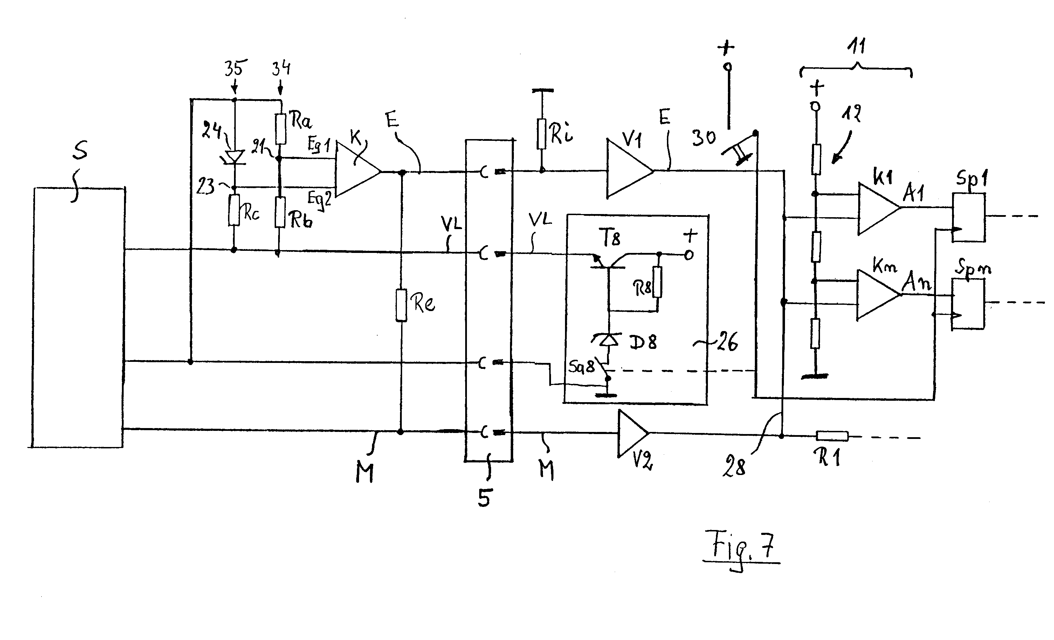

Wie Figur 7 zeigt, hat der Erkennungswiderstand Re hier eine andere Lage. Er stellt nämlich eine Verbindung vom Ausgang des Komparators K zur Meßsignalleitung M her. Hinter einem Verstärker V2 für das Meßsignal und das Erkennungssignal führt eine Leitung 28 zum Eingang des Stufenkomparators 11. Im übrigen arbeitet diese Schaltung wie die nach Figur 6.

- - - - - -

## B E Z U G S Z E I C H E N

| | |
|---|---|
| 5 | Steckverbinder |
| 5s | Sensor-Steckteil |
| 5g | Geräte-Steckteil |
| 9 | Abgriff |
| 10 | Spannungsteiler |
| 11 | Stufenkomparator |
| 12 | Spannungsteiler |
| 14 | Leuchtdiode |
| 15 | Spannungsteiler |
| 16 | Dekoder |
| 17 | Abgriff |
| 20 | Aktive Halbleiterschaltung |
| 21, 22, 23 | Abgriff |
| 24 | Referenzdiode |
| 26 | Spannungs-Konstanthalter |
| 28 | Leitung |
| 30 | Taster |
| 32 | Verbindung |
| 34, 35 | Reihenschaltung |

. — . — . — .

| | |
|---|---|
| A... | Ausgänge |
| C1 | Kondensator |
| D1 | Diode |
| D8 | Zenerdiode |
| G | Gerät |
| E | Erkennungsleitung |
| Eg | Eingang |
| K... | Komparatoren |
| M | Meßsignalleitung |

| | |
|---|---|
| Mf1, 2 | Monoflop |
| R... | Widerstand, Anpaßwiderstand |
| Re | Erkennungswiderstand |
| Ri | Innenwiderstand |
| Rm | Reihenwiderstand |
| Rr | Rückkopplungswiderstand |
| Rs, Rt | Widerstände |
| Rv | Reihenwiderstand |
| Rl | Relais |
| S | Sensor |
| Sa... | Schalter, Analogschalter |
| Sk... | Kodierungsschalter |
| St... | Steckelement |
| Sx | Umschalter |
| T... | Transistor |
| V... | Verstärker |
| Vo | Operationsverstärker |
| VL | Versorgungsleitung |

- - - - -

wil/11/ep-a.d                                                    wil-11-ep

Sr/Sa


PATENTANSPRÜCHE


1.  Vorrichtung zur automatischen Anpassung des Meßbereichs eines
    Anzeige- oder Auswertgerätes (Gerät) an den Bereich von Ausgangsspannungen eines Sensors für eine physikalische Größe, gekennzeichnet durch folgende Merkmale:

    a)  Zum Anschluß des Sensors an das Gerät dient ein Steckverbinder
        (5), dessen einer Steckteil (Sensor-Steckteil (5s)) mit dem
        Sensor (S) und dessen anderer Steckteil (Geräte-Steckteil
        (5g)) mit dem Gerät (G) elektrisch verbunden sind und über den
        eine Meßsignalleitung (M) zum Gerät führt,

    b)  zur Anpassung dient mindestens ein sensorseitig angeordneter
        Widerstand (Erkennungswiderstand), der durch eine über den
        Steckverbinder führende Erkennungsleitung (E) zu einer geräteseitigen Erkennungsschaltung führt.

2.  Vorrichtung nach Anspruch 1, dadurch gekennzeichnet, daß durch den
    Steckverbinder ein Spannungsteiler (10) in zwei Abschnitte unterteilt ist, von denen der sensorseitige Abschnitt mindestens einen
    Erkennungswiderstand (Re) und der geräteseitige Abschnitt den Innenwiderstand (Ri) des Gerätes enthält oder diesen Widerständen je-
    weils gleicht. (Figuren 1, 2, 3, 5, 6, 7)

3.  Vorrichtung nach Anspruch 2, dadurch gekennzeichnet, daß eine vom
    Erkennungswiderstand (Re) zum Gerät führende Leitung (M, E) zugleich Erkennungsleitung und Meßsignalleitung ist. (Figur 1)

4. Vorrichtung nach Anspruch 2, **gekennzeichnet** durch folgende Merkmale:

    a)   der Erkennungswiderstand (Re) liegt sensorseitig an dem einen Pol einer Gleichspannungsquelle,

    b)   die Erkennungsleitung führt von einem Abgriff (9) zwischen den beiden Widerständen (Re und Ri) des Spannungsteilers (10) (insbesondere über einen Verstärker (V1)) zu der Erkennungsschaltung.

(Figur 2)

5. Vorrichtung nach Anspruch 1, **gekennzeichnet** durch folgende Merkmale:

    a)   Die Meßsignalleitung (M) und die Erkennungsleitung (E) sind getrennte Leitungen,

    b)   die Meßsignalleitung führt geräteseitig (insbesondere über einen Verstärker (V2)) zu einem Abgriff (17) eines Spannungsteilers (15), dessen einer Zweig einen Reihenwiderstand (Rm) im Zuge der Meßsignalleitung (M) enthält und dessen anderer Zweig Reihenglieder aus je einem Widerstand ((Anpaßwiderstand (R1 bis Rn)) und einem Schalter (insbesondere Analogschalter (Sa1 bis San)) enthält, die zueinander und zum Eingang des Gerätes (G) parallelgeschaltet sind,

    c)   jeder dieser Schalter ist betätigbar durch eines von mehreren Schaltgliedern (insbesondere Relais (Rl1 bis Rln)), die mit den Ausgängen der Erkennungsschaltung verbunden sind.

(Figur 2)

6.  Vorrichtung nach Anspruch 5, dadurch **gekennzeichnet**, daß die Erkennungsschaltung mehrere Komparatoren (K1 bis Kn) aufweist, die
    gemeinsam einen Stufenkomparator (11) mit digitalem, insbesondere
    dezimalem Ausgang bilden und daß je ein Eingang der Komparatoren
    mit der Erkennungsleitung verbunden ist und der andere Eingang an
    je einem von verschiedenen Abgriffen eines Spannungsteilers (12)
    liegt. (Figur 2)

7.  Vorrichtung nach Anspruch 6, dadurch **gekennzeichnet**, daß der Stufenkomparator (11) ein Fensterkomparator ist.

8.  Vorrichtung nach Anspruch 6, dadurch **gekennzeichnet**, daß zwischen
    den Ausgängen (A1 bis An) der Komparatoren (K1 bis Kn) und der
    Spannungsquelle je eine Leuchtdiode (14) liegt. (Figur 2)

9.  Vorrichtung nach einem der Ansprüche 2, 5 oder 6, **gekennzeichnet**
    durch folgende Merkmale:

    a)  der Erkennungswiderstand (Re) liegt sensorseitig an dem einen
        Pol einer Wechselspannungsquelle,

    b)  die Erkennungsleitung (E) führt von einem Abgriff (9) zwischen
        den beiden Widerständen (Re und Ri) des Spannungsteilers (10)
        über einen Gleichrichter zur Erkennungsschaltung.

    (Figur 2 und 3)

10. Vorrichtung nach Anspruch 9, **gekennzeichnet** durch folgende Merkmale:

    a)  Zwischen den Abgriff (9) und den Gleichrichter ist ein Operationsverstärker (Vo) eingeschaltet, mit dessen einem Eingang
        der Abgriff (9) verbunden ist,

b)   der andere Eingang des Operationsverstärkers (Vo) ist mit einem Abgriff zwischen zwei (insbesondere gleich großen) Widerständen (Rs, Rt) eines Spannungsteilers verbunden, der die
Wechselspannungsquelle überbrückt.

(Figur 3)

11.  Vorrichtung nach einem der Ansprüche 6 bis 8, **gekennzeichnet** durch
folgende Merkmale:

a)   zur Anpassung dient eine Reihenschaltung von zwei sensorseitig
angeordneten Widerständen (Erkennungswiderstände (Re1, Re2)),
deren Mittelabriff mit der über den Steckverbinder (5) führenden Erkennungsleitung (E) verbunden ist,

b)   die Enden der Reihenschaltung sind durch eine aktivierbare
Halbleiterschaltung (20) mit den Polen einer Spannungsquelle
verbindbar,

c)   zur Aktivierung der Halbleiterschaltung ist für eine erste
Schaltzeit mit einer Dauer unterhalb einer Sekunde (insbesondere unter 20 msec) die Erkennungsleitung geräteseitig mit dem
einen Pol (insbesondere Masse) der Spannungsquelle verbindbar,

d)   mit den Ausgängen (A1 bis An) des Stufenkomparators sind Signaleingänge dynamischer Speicher (Sp1 bis Spn) verbunden, die
im Anschluß an die erste Schaltzeit während einer zweiten
Schaltzeit mit einer Dauer von weniger als einigen Sekunden
(insbesondere für etwa 1/2 sec) aktivierbar und damit für die
Ausgangssignale des Stufenkomparators durchlässig sind.

(Figur 5)

12. Vorrichtung nach Anspruch 11, **gekennzeichnet** durch folgende Merkmale:

   a) Geräteseitig ist ein Umschalter (Sx) angeordnet, der für die Dauer seiner ersten Schaltzeit in seiner ersten Schaltstellung durch ein Zeitglied, insbesondere einen monostabilen Multivibrator (Monoflop (Mf1)) gehalten wird,

   b) in seiner zweiten Schaltstellung verbindet der Umschalter (Sx) für die Dauer der zweiten Schaltzeit die Erkennungsleitung (E) mit einem zweiten Monoflop (Mf2), das einen dynamischen Eingang hat und dessen Ausgang mit einem weiteren, nämlich dynamischen Eingang der dynamischen Speicher verbunden ist,

   c) derart, daß das zweite Monoflop nach seiner Einschaltung während der zweiten Schaltzeit die dynamischen Speicher aktiv und damit für die Ausgangssignale des Stufenkomparators durchlässig erhält.

   (Figur 5)

13. Vorrichtung nach Anspruch 11 oder 12, dadurch **gekennzeichnet**, daß die aktivierbare Halbleiterschaltung (20) ein RC-Glied enthält, das im Ladezustand über weitere Schaltglieder (T1, T2) die Reihenschaltung der Erkennungswiderstände unter Spannung hält. (Figur 5)

14. Vorrichtung nach einem der Ansprüche 6 bis 8, **gekennzeichnet** durch folgende Merkmale:

   a) zur Anpassung dient sensorseitig ein Komparator (K), dessen beide Eingänge (Eg1, Eg2) mit je einem Abgriff (21, 23) von zwei Reihenschaltungen (34, 35) verbunden sind und dessen Ausgang mit der Erkennungsleitung (E) verbunden ist, die über den Steckverbinder (5) zur Erkennungsschaltung im Gerät führt,

b) die erste Reihenschaltung (34) enthält zwei (insbesondere gleich große) Widerstände (Ra, Rb),

c) die zweite Reihenschaltung (35) enthält einen Widerstand (Rc) und eine Diode (Referenzdiode (24)) und ist aktivierbar,

d) beide Reihenschaltungen liegen parallel zu einer Versorgungs-Spannungsquelle,

e) als solche dient ein Spannungs-Konstanthalter (26) mit umschaltbarer Ausgangsspannung,

f) zur Aktivierung der zweiten Reihenschaltung (35) für eine Schaltzeit unterhalb einer Sekunde (insbesondere unter 20 msec) ist der Spannungs-Konstanthalter auf eine andere (insbesondere höhere als seine normale) Ausgangsspannung umschaltbar,

g) derart, daß der Komparator nur dann ein Ausgangssignal abgibt, wenn die zweite Reihenschaltung aktiviert ist,

h) mit den Ausgängen (A1 bis An) des Stufenkomparators sind Signaleingänge dynamischer Speicher (Sp1 bis Spn) verbunden, die während der Schaltzeit für eine Dauer von weniger als einigen Sekunden (insbesondere für etwa 1/2 sec) aktivierbar und damit für die Ausgangssignale des Stufenkomparators durchlässig sind.

(Figuren 6 und 7)

15. Vorrichtung nach Anspruch 14, **gekennzeichnet** durch folgende Merkmale:

a) der Spannungs-Konstanthalter (26) enthält zwischen den beiden Polen einer Spannungsquelle eine Zenerdiode (D8) und in Reihe mit dieser die Kollektor-Basis-Strecke eines NPN-Transistors (T8),

b) in Reihe mit der Zenerdiode (D8) liegt ein Schalter ((Öffner (Sa8)), der im Normalzustand geschlossen und nur kurzzeitig (für die Schaltzeit) zu öffnen ist,

c) die Kollektor-Emitter-Strecke des Transistors (T8) ist mit einer Versorgungsleitung (VL) verbunden, die über den Steckverbinder (5) zum Sensor und der ersten und zweiten Reihenschaltung (34, 35) führt,

d) der Schalter (Sa8) ist zugleich mit einem weiteren Schalter (Taster 30) schließbar, der zur Aktivierung der dynamischen Speicher (Sp1 bis Spn) dient,

e) derart, daß der Spannungs-Konstanthalter während der Schaltzeit eine höhere als die normale Spannung (in Leitung VL) gibt, sich dadurch die Potentiale an den Eingängen (Eg1), Eg2) des Komparators (K) ändern und infolgedessen am Ausgang des Komparators (K) und in der Erkennungsleitung ein Signal auftritt.

(Figuren 6 und 7)

16. Vorrichtung zur automatischen Anpassung des Meßbereichs eines Anzeige- oder Auswertgerätes (Gerät) an den Bereich von Ausgangs spannungen eines Sensors für eine physikalische Größe, gekennzeichnet durch folgende Merkmale:

a) Zum Anschluß des Sensors an das Gerät dient ein Steckverbinder (5), dessen einer Steckteil (Sensor-Steckteil (5s)) mit dem Sensor (S) und dessen anderer Steckteil (Geräte-Steckteil (5g)) mit dem Gerät (G) elektrisch verbunden sind,

b) zur Anpassung dient eine Kodierungs- und Dekodierungsvorrichtung,

c) sensorseitig sind zur Kodierung Kodierungsschalter (Sk1 bis Skn) vorgesehen, deren eine Seite gemeinsam an dem einen Pol einer Spannungsquelle liegt und deren andere Seiten mit je einem von mehreren Steckelementen (St1 bis Stn) des Sensor-Steckteils (5s) verbunden sind,

d) die zugehörigen Steckelemente des Gerätesteckteils (5g) sind mit einer gleichen Anzahl von Eingängen eines Dekoders (insbesondere binären Eingängen eines Binär-Dezimal-Dekoders (16)) verbunden, der (insbesondere dezimale) Ausgänge (A1 bis Am) hat,

e) die Meßsignalleitung (M) führt geräteseitig (insbesondere über einen Vertärker (V2)) zu einem Abgriff (17) eines Spannungsteilers (15), dessen einer Zweig einen Reihenwiderstand (Rm) im Zuge der Meßleitung (M) enthält und dessen anderer Zweig zueinandr und zum Eingang des Gerätes (G) parallelgeschaltete Reihenglieder aus je einem Widerstand (Anpaßwiderstand R1 bis Rn) und einem Schalter (Sa1 bis San) enthält,

0212045

f)   mindestens einer dieser Schalter ist betätigbar durch mindestens ein Signal, das an mindestens einem der Ausgänge (A1 bis
     Am) des Dekoders (16) auftritt.

(Figur 4 und 2)

- - - - - -

Fig. 1

Fig.2

0212045

Fig. 3

Fig. 4

Fig. 5

Fig. 6

6/7

0212045

0212045

Fig. 7